# EUROPEAN PATENT SPECIFICATION

(11) **EP 0 828 071 B1**
(45) Date of publication and mention of the grant of the patent: **05.03.2003**
(21) Application number: 97115343.2
(22) Date of filing: 04.09.1997
(51) Int. Cl.: F02D 41/38, F02D 41/40, F02D 41/10, F02M 41/14, F02B 37/18

(54) **Acceleration control apparatus for a diesel engine provided with supercharger**
Vorrichtung zur Steuerung der Beschleunigung eines aufgeladenen Dieselmotors
Dispositif pour commander l'accélération d'un moteur diesel suralimenté

(30) Priority: 05.09.1996 JP 23557796
(43) Date of publication of application: 11.03.1998
(73) Proprietor: TOYOTA JIDOSHA KABUSHIKI KAISHA, Aichi-ken (JP)
(72) Inventor: Yamaguchi, Masaaki, Toyota-shi, Aichi-ken (JP); Takeuchi, Yasuhiro, Okazaki-shi, Aichi-ken (JP)
(74) Representative: Pellmann, Hans-Bernd, Dipl.-Ing.

(56) References cited:
- EP-A- 0 206 517
- EP-A- 0 425 798
- GB-A- 2 052 097
- US-A- 4 756 292

## Description

### BACKGROUND OF THE INVENTION

### 1. Field of the Invention

The present invention relates to an acceleration control apparatus for a diesel engine provided with a supercharger and, more particularly, to an acceleration control apparatus suitable for controlling fuel injection of a diesel engine provided with a supercharger.

### 2. Description of the Related Art

Conventionally, as disclosed in Japanese Laid-Open Patent Application No.7-65523, an apparatus for controlling fuel injection of a diesel engine is known. In a diesel engine, the amount of fuel to be injected is calculated based on a revolution speed NE of the engine and an accelerator opening degree θ. In a diesel engine provided with a supercharger, the amount of fuel to be injected is calculated on the assumption that the super charger is normally operated.

When an operational condition of the diesel engine is changed, a delay of response occurs until the supercharger actually responds to the operational state after the change. Particularly, the turbocharger which uses a pressure of exhaust gas as a drive force generates a relatively large delay in response. Accordingly, when an operation for acceleration is performed in the diesel engine provided with the turbocharger, a condition occurs in which the amount of injected fuel is increased prior to the increase in the amount of intake air.

When the amount of the injected fuel is increased prior to the increase in the amount of intake air, an over-rich condition of an air-fuel ratio occurs, resulting in a problem in that smoke tends to be generated. In such a case, if the amount of injected fuel is decreased, the occurrence of the over-rich condition of the air-fuel ratio is prevented so as to suppress the generation of the smoke. However, if merely the amount of injected fuel is decreased, the output torque of the diesel engine is decreased, resulting in an disadvantage in that an acceleration characteristic is deteriorated.

The smoke generation can be suppressed, for example, by advancing the angle of an injection time. If the angle of the fuel injection time is advanced in a diesel engine, a time is reserved for sufficiently evaporating the fuel. When the fuel is sufficiently evaporated, an efficient combustion can be achieved which reduces unburned fuel, resulting in a reduction of smoke. However, if such a control is performed, a diesel knock tends to be generated.

In order to suppress the generation of the diesel knock, it is known that a delayed angle control of the fuel injection time is effective. The above-mentioned conventional apparatus is provided with a function to perform the delayed angle control of the fuel injection time. Thus, according to the above-mentioned conventional apparatus, a generation of diesel knocking noise can be suppressed while a decrease in the output torque of the diesel engine is reduced.

However, if the delayed angle control for the fuel injection time is performed while the diesel engine is accelerated, a large amount of fuel may be injected into the diesel engine after a piston starts to move toward the bottom dead center, that is, after a start of an explosion process. In such a condition, the unburned component of fuel tends to be exhausted. In this respect, the above-mentioned conventional apparatus has a problem in that an exhaust characteristic tends to be deteriorated when the diesel engine is accelerated.

### SUMMARY OF THE INVENTION

It is a general object of the present invention to provide an improved and useful acceleration control apparatus of a diesel engine provided with a supercharger in which the above-mentioned problems are eliminated.

A more specific object of the present invention is to provide an acceleration control apparatus of a diesel engine provided with a supercharger which suppresses generation of a diesel knocking noise while maintaining a good acceleration characteristic and a good exhaust characteristic.

In order to achieve the above-mentioned objects, there is provided according to the present invention an acceleration control apparatus for performing a fuel injection control during acceleration of a diesel engine provided with a supercharger,
characterized in that:
fuel injection quantity calculating means calculates a quantity of fuel to be injected based on operational condition information;
acceleration start detecting means detects a start of acceleration of the diesel engine; and
acceleration injection control means delays, when the acceleration of the diesel engine is started, a start time of injection of fuel from a start time of injection of fuel under a normal condition and increases a pressure of the fuel for injection.

In the present invention, when a request for acceleration is made for the diesel engine, a quantity of fuel to be injected which responds to the request for acceleration is calculated. Accordingly, a good acceleration performance is provided to the diesel engine. When the acceleration is started, the start time of injection of fuel is delayed. Thus, generation of diesel knocking noise is reduced even if a response delay is generated in the supercharger. Additionally, when the acceleration of the diesel engine is started, the fuel is injected at a pressure higher than a pressure generated under a regular condition. If the pressure of injected fuel is high, a large amount of fuel can be injected in a short time. Accordingly, even when the start time of fuel injection is delayed, the end time of injection of fuel is not considerably shifted to the delayed side. Thus, the unburned components included in exhaust gas are not increased, resulting in a good emission characteristic being maintained.

In one embodiment of the present invention, the operational condition information may include an engine speed and a degree of opening of an accelerator.

Additionally, in one embodiment of the present invention, the acceleration start detecting means may detect the start of acceleration when a difference between a degree of opening of the diesel engine at the present time and a degree of opening of the diesel engine at a time a first predetermined period before the present time exceeds a predetermined value.

Additionally, a detecting operation of the acceleration start detecting means may be performed every predetermined period, and the difference is obtained based on the degree of opening detected in the detecting operation performed at the present time and the degree of opening detected in the detecting operation performed a predetermined number of detecting operations preceding the present detecting operation.

In the acceleration control apparatus according to the present invention, the acceleration injection control means may include:
prestroke value setting means for setting a predetermined delay time provided for the start time of injection of fuel; and
prestroke value decreasing means for continuously decreasing the predetermined delay time during a second predetermined period.

Additionally, in one embodiment of the present invention, the predetermined delay time may be increased until the difference reaches a predetermined maximum value, and is maintained at the predetermined maximum value after the difference reaches the predetermined maximum value.

Further, in one embodiment according to the present embodiment, the acceleration start detecting means may detect the start of acceleration when a difference between an engine speed of the diesel engine at the present time and an engine speed of the diesel engine at a time a first predetermined period before the present time exceeds a predetermined value.

Additionally, a detecting operation of the acceleration start detecting means may be performed every predetermined period, and the difference may be obtained based on the engine speed detected in the detecting operation performed at the present time and the engine speed detected in the detecting operation performed a predetermined number of detecting operations preceding the present detecting operation.

Further, the acceleration injection control means may include:
initial value setting means for setting a predetermined delay time provided for the start time of injection of fuel; and
initial value decreasing means for continuously decreasing the predetermined delay time during a second predetermined period.

Additionally, in the acceleration control apparatus according to the present invention,
a fuel injection valve may inject fuel to the diesel engine in synchronization with a change in a crank angle of the diesel engine;
spill valve opening means may open a spill valve when a crank angle of the diesel engine reaches a predetermined valve closing angle, the spill valve being closed for supplying fuel to the fuel injection valve;
prestroke value setting means may set a predetermined prestroke value to the predetermined valve closing angle when the acceleration of the diesel engine is started; and
prestroke value decreasing means may decrease the predetermined prestroke value at a predetermined rate after the predetermined prestroke value is set to the valve closing angle.

According to this invention, when the crank angle of the diesel engine reaches the value closing angle, the spill valve is closed. When the spill valve is closed, the fuel injection valve is set to a state where fuel can be injected. When the acceleration of the diesel engine is started, the prestroke value is set to the valve closing angle of the spill valve. Accordingly, an injection of fuel is not started until the crank angle of the diesel engine reaches the prestroke valve. Thus, when the acceleration of the diesel engine is started, the start time of the fuel injection is shifted to the delayed angle side.

Additionally, when the prestroke value is set to the valve closing angle, the closing time of the spill valve is set to a time when an amount of lift of a plunger provided in the fuel injection pump reaches an appropriate value. If the spill valve is closed when the amount of lift of the plunger reaches the appropriate value, a pressure in a pump chamber provided in the fuel injection valve is rapidly increased. Thus, according to the present invention, a higher pressure for injection of fuel is generated as compared to that of the regular operation when the acceleration of the diesel engine is started.

As mentioned above, even if a response delay is generated in the supercharger, a good acceleration performance and a good emission characteristic are maintained and the generation of diesel knocking noise is suppressed by shifting the start time of fuel injection to the delayed angle side and the injection of fuel is performed at a high pressure when the acceleration of the diesel engine is started. The influence of the response delay of the supercharger is reduced gradually after the acceleration is started. In the present invention, the prestroke value is decreased with respect to passage of time after the acceleration is started, similar to the reduction in the response delay of the supercharger. Accordingly, the prestroke control is ended gradually after the acceleration of the diesel engine is started.

Other objects, features and advantages of the present invention will become more apparent from the following detailed description when read in conjunction with the accompanying drawings.

### BRIEF DESCRIPTION OF THE DRAWINGS

FIG.1 is an illustration of a system structure according to a first embodiment of the present invention;
FIG.2 is a cross-sectional view of a fuel injection pump shown in FIG.1;
FIG.3 is a cross-sectional view of the fuel injection pump taken along a line III-III of FIG.2;
FIG.4 is a time chart for explaining an operation of the system according to the first embodiment of the present invention;
FIG.5 is a flowchart of a control routine performed in the first embodiment of the present invention;
FIG.6 is a graph representing a map referred to when an initial value is set to a prestroke value in the routine shown in FIG.5;
FIG.7 is a graph representing a relationship between an interruption period and an engine speed; and
FIG.8 is a flowchart of a control routine performed in a second embodiment of the present invention.

### DETAILED DESCRIPTION OF THE PREFERRED EMBODIMENTS

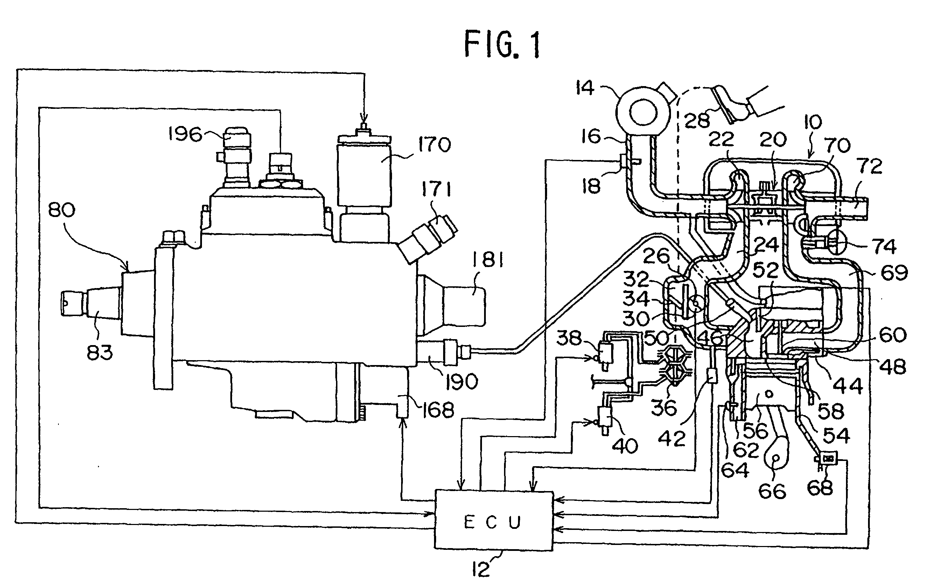

FIG.1 is an illustration of a system structure of a diesel engine 10 which is provided with an injection control apparatus according to a first embodiment of the present invention. The diesel engine 10 is an electronic control type diesel engine which has a function to perform an electric control of fuel injection. The diesel engine 10 is controlled by an electronic control unit 12 (hereinafter referred to as ECU 12).

The diesel engine 10 includes an air filter 14 which is connected to an intake pipe 16. The intake pipe 16 is provided with an intake air temperature sensor 18 which senses a temperature of air flowing through the intake pipe 16. An output signal of the intake air temperature sensor 18 is provided to the ECU 12. The ECU 12 determines a temperature THA of the intake air based on the output signal of the intake air temperature sensor 18.

The intake pipe 16 is connected to a compression chamber 22 of a turbocharger 20. Additionally, an intake pipe 24 is connected to the downstream side of the compression chamber 22. An intake air throttle valve 26 is provided inside the intake pipe 24. The intake air throttle valve 26 opens and closes in relation to an operation of an accelerator pedal 28. Further, an accelerator opening degree sensor 30 is provided adjacent to the intake air throttle valve 26. The accelerator opening degree sensor 30 outputs an electric signal corresponding to a degree of opening of the intake air throttle valve 26. The output signal of the accelerator opening degree sensor 30 is provided to the ECU 12. The ECU 12 determines a degree of opening of the intake air throttle valve 26, that is, an accelerator opening degree θ, based on the output signal of the accelerator opening degree sensor 30.

The intake pipe 24 is provided with a bypass passage 32 which bypasses the intake air throttle valve 26. The bypass passage 32 is provided with a bypass throttle valve 34 which is connected to a negative pressure actuator 36. Additionally, vacuum switching valves (hereinafter referred to as VSVs) 38 and 40 are connected to the negative pressure actuator 36. The VSVs 38 and 40 are operated by the ECU 12. The ECU 12 controls the VSVs 38 and 40 so that the bypass throttle valve 34 is fully closed when the diesel engine 10 is at a stopped state; the bypass throttle valve 34 is half-open when the diesel engine 10 is in an idle state; and the bypass throttle valve 34 is fully open when the diesel engine 10 is in a regular operational state.

An intake air pressure sensor 42 is connected to the intake pipe 24 on the downstream side of the intake throttle valve 26 and the bypass throttle valve 34. The output signal of the intake air pressure sensor 42 is provided to the ECU 12. The ECU 12 determines an intake air pressure on the downstream side of the intake air throttle valve 26 and the bypass throttle valve 34.

The diesel engine 10 includes a cylinder head 44. A divided combustion chamber 46 and an exhaust port 48 are formed in the cylinder head 44. The diesel engine 10 is a six-cylinder engine. Accordingly, the divided combustion chamber 46 and exhaust port 48 are provided to each of the six cylinders in the cylinder head 44. A fuel injection valve 50 and a glow plug 52 are provided in the cylinder head so that their ends are exposed in the divided combustion chamber 46.

The diesel engine includes a cylinder block 54 and a piston 56 which moves inside the cylinder block. A main combustion chamber 58 are formed between a top surface of the piston 56 and a bottom surface of the cylinder head 44. Both the divided combustion chamber 46 and the exhaust port 48 are connected to the main combustion chamber 58. An exhaust valve 60 is incorporated into the cylinder head 44. The exhaust valve 60 opens and closes the exhaust port 48 in response to a crank angle of the engine.

A water jacket 62 is formed in a wall of the cylinder block 54. Additionally, a water temperature sensor 64 is provided in the cylinder block 54 so that an end thereof is exposed in the water jacket 62. The output signal of the water temperature sensor 64 is provided to the ECU 12. The ECU 12 determines a temperature THW of coolant flowing in the water jacket 62 based on the output signal of the water temperature sensor 12.

A crank shaft 66 is connected to the piston 56. Additionally, a reference position sensor 68 is provided in the cylinder block 54. The reference position sensor 68 generates a pulse signal when the rotational angle of the crank shaft 66 reaches a reference angle. The output signal of the reference position sensor 68 is provided to the ECU 12. The ECU 12 determines that the rotational angle of the crank shaft reaches the reference angle when the pulse signal is provided from the reference position sensor 68.

An exhaust pipe 69 is connected to the exhaust port 48 formed in the cylinder head 44. The exhaust pipe 69 is connected to a turbine chamber 70 of the turbocharger 20. Additionally, an exhaust pipe 72 which opens to an atmosphere is connected to the turbine chamber 70 on the downstream side thereof. Further, the exhaust pipes 69 and 72 are connected to each other via a waste gate valve 74 which opens when a pressure exceeding a predetermined pressure is generated in the exhaust pipe 69.

The fuel injection valve 50 of the diesel engine 10 is supplied with a high-pressure fuel from a fuel injection pump 80 when a fuel should be injected to the diesel engine 10. The fuel injection valve 50 injects the fuel toward the divided combustion chamber 46 when the fuel pressurized to a greater degree than a predetermined pressure is supplied from the fuel injection pump 80.

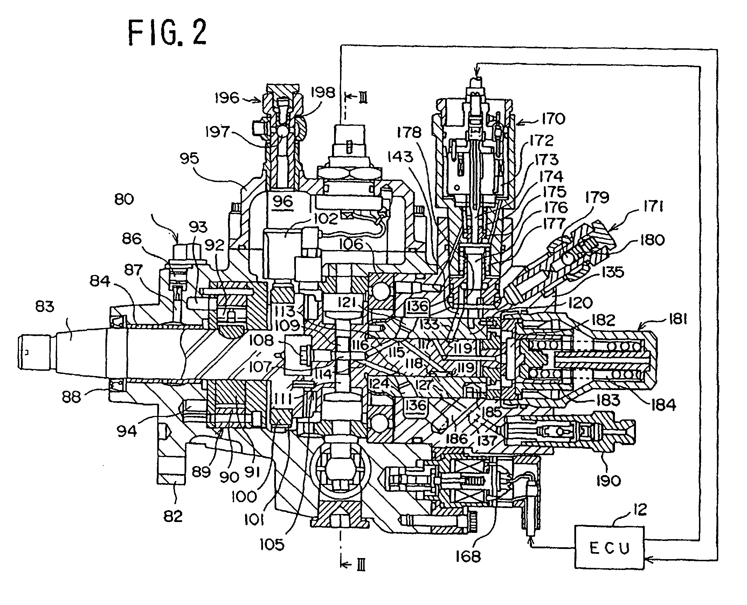

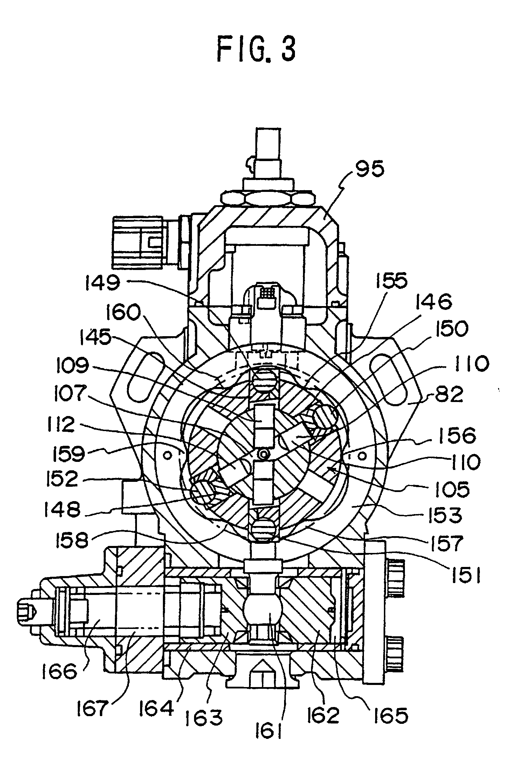

A description will now be given, with reference to FIGS.2 and 3, of a structure of the fuel injection pump 80. FIG.2 shows an entire structure of the fuel injection pump 80. The fuel injection pump 80 supplies a high-pressure fuel to the six-cylinder diesel engine.

The fuel injection pump 80 includes a housing 82 in which a drive shaft 83 is provided. The drive shaft 83 is rotatably supported by an oil feed type bearing 84 mounted on the housing 82. The crank shaft 66 is coupled to the drive shaft 83 via a belt not shown in the figures. The drive shaft 83 rotates at one half of the rotational speed of the crank shaft 66 when the diesel engine is operated.

The housing 82 is provided with a fuel inlet 86. Fuel is supplied to the fuel inlet 86 from a fuel tank not shown in the figures. The fuel inlet 86 is connected to an oil path 87 which leads to an outer periphery of the oil feed type bearing 84. The fuel introduced into the oil feed type bearing 84 by passing through the oil path 87 intrudes between the oil feed type bearing 84 and drive shaft 83, and serves as a lubricant. An oil seal 88 is provided at a position adjacent to the oil feed type bearing 84 on an end portion (left end in FIG.2) of the housing 82 so as to prevent leaking of fuel.

A bane type feed pump 89 (hereinafter referred to as feed pump) is incorporated into the housing 82. The feed pump 89 comprises an outer wall 90, a rotor 91 and a plurality of banes 92. The outer wall 90 is a cylindrical member having an inner wall surface which is eccentric to the rotational center of the drive shaft 83. The outer wall 90 is fixed to the housing 82. The rotor 91 is a cylindrical member fixed to the drive shaft 83, and has a plurality of slits extending in radial directions of the rotor 91. The banes 92 are accommodated in the respective slits of the rotor 91. When the rotor 91 is rotated, the banes 92 move inside the slits while ends of the banes are made to contact the outer wall 90.

In the housing 82, a fuel intake path 93 is formed which is connected to the fuel inlet 86. The fuel introduced into the fuel intake path 93 is lead to a space (hereinafter referred to as a pump space) which is defined by banes 92 and the outer wall 90. When the rotor 91 is rotated, the volume of the pump space is decreased, and the fuel in the pump space is pressurized. The fuel thus pressurized is introduced into a fuel delivery path 94 formed in the housing 82.

In the housing 82, a cover 95 is mounted at a position where an end (right end in FIG.2) of the drive shaft 83 is covered by the cover 95. A fuel chamber 96 is formed in the interior of the cover 95. The fuel pressurized by the feed pump 89 is delivered to the fuel delivery path 94, and thereafter the fuel is introduced into the fuel chamber 96 via an oil path not shown in the figures.

A pulser 100 is fixed to the drive shaft 83. The pulser 100 is an annular member formed of a magnetic material. A plurality of protrusions 101 are provided on the outer peripheral surface of the pulser 100. In the fuel chamber 96, an electromagnetic pick-up sensor 102 is provided at a position where the sensor 102 faces the protrusions 101. The electromagnetic pick-up sensor 102 comprises a pick-up coil and a magnet therein. The electromagnetic pick-up sensor 102 is arranged so that a magnetic flux is generated by the magnet loops by passing the pick-up coil, an air gap between the sensor 102 and the pulser 100 and a magnetic circuit including the pulser 100. According to the above-mentioned structure, the electromagnetic pick-up sensor 102 outputs a signal pulse having a wave height corresponding to a rate of change dΦ/dt of the magnetic flux density Φ when one of the protrusions 101 passes by the sensor 102. The output signal of the electromagnetic pick-up sensor 102 is provided to the ECU 12. The ECU 12 determines the rotational speed of the crank shaft 66 based on the output signal of the electromagnetic pick-up sensor 102.

A rotor 105 is coupled to the drive shaft 83. In the housing 82, a bearing 106 is provided. The rotor 105 is supported by the bearing 106 so that the rotor 105 is rotatable together with the drive shaft 83. A pump chamber 107 is formed in the rotor 105. The pump chamber 107 comprises an axial opening and four radial openings. The axial opening extends along the center axis of the rotor 105 from the left side to the right side of FIG.2, and has a predetermined length. The radial openings extend from the outer peripheral surface of the rotor 105 to the axial opening. The open end of the axial opening is closed by a plug 108. Plungers 109 to 112 (only plungers 109 and 111 are illustrated in FIG.1) are inserted into the respective axial openings of the pump chamber 107.

In the rotor 105, fuel passages 113 and 114 are provided, an end of each of which is connected to the axial opening of the pump chamber 107. The other end of each of the fuel passages 113 and 114 is connected to fuel intake ports 115 and 116 formed in the outer peripheral surface of the rotor 105, respectively. The fuel intake ports 115 and 116 are provided opposite to each other with respect to the center axis of the rotor 105.

In the rotor 105, there is provided a fuel passage 117, one end of which is connected to the fuel intake port 115. The other end of the fuel passage 117 is connected to a fuel discharge groove 118 provided in the outer peripheral surface of the rotor 105. The fuel discharge groove 118 has a predetermined length in the axial direction of the rotor 105. Additionally, an annular groove 119 is formed in the outer peripheral surface of the rotor 105 at a position where the outer peripheral surface intersects the fuel discharge groove 118.

A cylinder 120 is provided in the housing 82. The rotor 105 is sealingly and rotatably supported in the cylinder 120. In the cylinder 120, there are provided six fuel passages 121 to 126 at equal intervals so as to surround the rotor 105, the number of the fuel passages corresponding to the number of the cylinders of the diesel engine 10 (only the fuel passages 121 and 124 are illustrated in FIG.1). Two of the fuel passages 121 to 126 are sequentially connected to the fuel intake ports 115 and 116 each time the rotational angle of the rotor 105 reaches a predetermined rotational angle (hereinafter the predetermined rotational angle is referred to as an intake rotational angle).

Additionally, in the cylinder 120, there are provided six fuel passages 127 to 132 at equal intervals so as to surround the rotor 105, the number of the fuel passages corresponding to the number of the cylinders of the diesel engine 10 (only the fuel passage 127 is illustrated by dashed lines in FIG.1). The fuel passages 127 to 132 are sequentially connected to an end (the left end in FIG.2) of the fuel discharge groove 118 each time the rotational angle of the rotor 105 reaches a predetermined rotational angle (hereinafter the predetermined rotational angle is referred to as a discharge rotational angle).

Further, a spill passage 133 is provided in the cylinder 120. The spill passage 133 is provided at a position where the spill passage 133 is connected to the annular groove 119. The annular groove 119 is continuously connected to the pump chamber 107 via the fuel discharge groove 118, the fuel passage 117 and the fuel passage 113. Accordingly, a pressure of fuel equal to a pressure in the pump chamber 107 is continuously introduced into the spill passage 133.

A second housing 135 is attached to the outer periphery of the cylinder 120. A fuel gallery 136 which connects to the fuel passages 121 to 126 is provided in the housing 135. The fuel gallery 136 is connected to the fuel chamber 96 via an oil path not shown in the figures. Accordingly, a fuel having a predetermined pressure is continuously supplied to the fuel gallery 136 when the feed pump 89 is operated. Additionally, the second housing is provided with fuel passages 137 to 142 (only the fuel passage 137 is illustrated by dashed lines in FIG.1) which are connected to the respective fuel passages 127 to 132 and a spill passage 143 connected to the spill passage 133.

A description will now be given, with reference to FIGS.2 and 3, of a structure of a surrounding part of the pump chamber 107 in detail. FIG.3 is a cross-sectional view of the fuel injection pump 80 taken along a line III-III of FIG.2.

As shown in FIG.3, the plungers 109 to 112 are inserted into the respective four axial openings forming the pump chamber 107 provided in the rotor 105. The rotor 105 is also provided with roller shoes 145 to 148 which contact end surfaces of the plungers 109 and 112. The roller shoes 145 to 148 support respective rollers 149 to 152.

A roller ring 153 is provided on the outer side of the rollers 149 to 152. The roller ring 153 is an annular member provided so as to surround the outer periphery of the rotor 105. The above-mentioned electromagnetic pick-up sensor 102 is fixed to the roller ring 153. Thus, according to the signal pulse output from the electromagnetic pick-up sensor 102, it is possible to detect the rotational angle of the rotor 105 with respect to the roller ring 153.

On an inner surface of the roller ring 153, six cams 155 to 160 are provided at equal intervals, that is, each 60 degrees. When the rotor 105 is rotated, the rollers 149 to 152 move along the cams 155 to 160. When the rollers 149 to 152 move along the cams 155 to 160, the plungers 109 to 112 reciprocate in radial directions in the pump chamber 107. Hereinafter, a position of the plungers 109 to 112 when the rollers 149 to 152 are off the cams 155 to 160 is referred to as a "lift '0' position"; and a displacement in radial directions generated in the plungers 109 to 112 when the rollers 149 and 152 are on the cams 155 to 160 is referred to as an "amount of lift" of the plungers 109 to 112. The plungers 109 to 112 are arranged so that all of the plungers 109 to 112 are engaged with the cams 155 to 160 at the same time. Thus, the same amount of lift is always generated in the plungers 109 to 112.

The volume of the pump chamber 107 is decreased in the process in which the amount of lift of the plungers 109 to 112 is increased, that is, the process in which the rollers 149 to 152 move over the cams 155 to 160. On the other hand, the volume of the pump chamber 107 is increased in the process in which the amount of lift of the plungers 109 to 112 is decreased, that is, the process in which the rollers 149 to 152 move off the cams 155 to 160. In the fuel injection pump 80, the fuel passages 121 to 126 provided to the cylinder 120 are connected to the intake ports 115 and 116 of the rotor 105 when the rollers 149 to 152 move off the cams 155 to 160. On the other hand, the fuel passages 127 to 132 are connected to the fuel discharge groove 118 when the rollers 149 to 152 move over the cams 155 to 160.

According to the above-mentioned structure, the fuel in the gallery 136 is introduced into the pump chamber 107 in the process in which the roller 149 to 152 move off the cams 155 to 160. On the other hand, the fuel in the pump chamber 107 is delivered to the fuel discharge groove 118 and the fuel passage 127 in the process in which the rollers move over the cams 155 to 160. According to the fuel injection pump 80, the above-mentioned suction and discharge processes are repeated six times while the rotor 105 makes a single turn.

The roller ring 153 is provided in the housing 82 so that the roller ring 153 can rotate by a predetermined angle range. As shown in FIG.3, a rod 161 is fixed on a lower end of the roller ring 153. The rod 161 is supported by timer pistons 162 and 163 provided under the roller ring 153. The timer pistons 162 and 163 are slidably provided in a cylinder 164. A high-pressure chamber 165 and a low-pressure chamber 166 are formed in the cylinder 164. The high-pressure chamber 165 is defined by the timer piston 162, and the low-pressure chamber 166 is defined by the timer piston 163. The low-pressure chamber 166 is provided with a spring 167 which urges the timer piston 163 toward the rod 161. The high-pressure chamber 165 and the low-pressure chamber 166 are connected to the fuel delivery path 94 and the fuel tank, respectively, via oil paths not shown in the figures. Additionally, the high-pressure chamber 165 and the low-pressure chamber 166 are connected to each other via a rotary valve 168 (hereinafter referred to as TCV 168) shown in FIG.2.

The TCV 168 is a solenoid valve which controls a conductive condition between the high-pressure chamber 165 and the low pressure chamber 166. The TCV 168 is operated by a duty control by the ECU 12. When the duty ratio of a drive signal supplied to the TCV 168 is varied, the conductive state between the high-pressure chamber 165 and the low-pressure chamber 166 is changed. When the high pressure chamber 165 and the low pressure chamber 166 are conductive to each other, a pressure difference between the pressures in both chambers is decreased. Thus, the timer pistons 162 and 163 and the rod 161 moves to the right in FIG.3 due to a bias force of the spring 167. At this time, the roller ring 153 rotates counterclockwise within the housing 82.

On the other hand, when the connection between the high pressure chamber 165 and the low pressure chamber 166 is interrupted by the TCV 168, a large pressure difference is generated between the high pressure chamber 165 and the low pressure chamber 166. In this case, the timer pistons 162 and 163 and the rod 161 move to the left in FIG.3 against the bias force of the spring 167. At this time, the roller ring 153 rotates clockwise within the housing 82.

As mentioned above, according to the fuel injection pump 80, the roller ring 153 can be rotated within the housing 82 by changing the duty ratio of the drive signal supplied to the TCV 168. When the roller ring 153 rotates within the housing 82, a relationship between the angular position of the rotor 105 and a time when the suction and discharge processes are performed in the fuel injection pump 80 is changed. Thus, according to the fuel injection pump 80, a relationship between the rotational angle of the diesel engine 10 and the time when the suction and discharge processes are performed in the fuel injection pump 80 can be appropriately changed by controlling the TCV 168.

As shown in FIG.2, the fuel injection pump 80 comprises a spill valve 170 and a fuel recirculation valve 171. The spill valve 170 and the fuel recirculation valve 171 are assembled to the second housing 135.

The spill valve 170 comprises an electromagnetic coil 172 and an operational shaft 173. The electromagnetic coil 172 is connected to the ECU 12. The ECU 12 supplies a current to the electromagnetic coil 172 at a predetermined timing when the diesel engine 10 is operated. When a current is supplied to the electromagnetic coil 172, the operational shaft 173 is urged downwardly. A spring 174 and a stopper 175 are provided near the lower end of the operational shaft 173 so that the spring 174 surrounds the operational shaft 173. The spring 174 urges the stopper 175 downwardly in FIG.2.

A valve member 176 is provided under the operational shaft 173 and the stopper 175. A spring 177 is provided around the valve member 176. The spring 177 urges the valve member 176 upwardly in FIG.2. A valve seat 178 is formed under the valve member 176. When an electromagnetic force is generated by the electromagnetic coil 172, the valve member 176 is seated on the valve seat 178. On the other hand, when no electromagnetic force is generated by the electromagnetic coil 172, the valve member 176 is separated from the valve seat 178.

When the valve member 176 is seated on the valve seat 178, the spill passage 143 formed in the second housing 135 is closed, that is, the annular groove 119 of the rotor 105 is isolated from an external space. When the discharge process is performed in a state where the annular groove 119 is isolated from the external space, the pressure in the pump chamber 107 is increased to a sufficiently high pressure.

When the valve member 176 of the spill valve 170 is separated from the valve seat 178, the spill passage 143 is connected to both the fuel gallery 136 and the fuel recirculation valve 171. It should be noted that, in the following description, a state where the valve member 176 is separated from the valve seat 178 is referred to as an open state of the spill valve 170; and a state where the valve member 176 is seated on the valve seat 178 is referred to as a closed state of the spill valve 170. when the spill valve 170 is open as mentioned above, the annular groove 119 of the rotor 105 is connected to the fuel gallery 136. In this state, the fuel in the pump chamber 107 is not pressurized since the fuel delivered by the plungers 109 to 112 is released to the fuel gallery 136 even if the fuel discharge process is performed.

The fuel recirculation valve 171 is connected to the fuel tank not shown in the figures. The fuel recirculation valve 171 includes a ball valve 179 and a spring 180 therein. The ball valve 179 and the spring 180 together serve as a check valve which opens, when a pressure exceeding a predetermined pressure is generated in the spill valve 170, so as to release the fuel in the spill valve 170 to the fuel tank. According to the fuel recirculation valve 180, the high-pressure fuel flowing from the spill passage 173 can be returned to the fuel tank after appropriately decreasing the pressure when the spill valve 170 is open.

The fuel injection pump 80 includes an accumulator 181. The accumulator 181 is assembled into the second housing 135 so that the accumulator 181 is opposite to the end of the rotor 105. The accumulator comprises a fuel chamber 182, a piston 183 defining the fuel chamber 182 and a spring 184 urging the piston 183 toward the fuel chamber 182.

The cylinder 120 and the second housing 135 are provided with connecting paths 185 and 186 which connect the fuel chamber 182 and the fuel gallery 136 to each other. Accordingly, the pressure in the fuel chamber 182 is substantially equal to the pressure in the fuel gallery 136. When the pressure in the fuel gallery 136 becomes a high pressure, the piston 183 is moved against the urging force of the spring 184 so that the volume of the fuel chamber 182 is increased. On the other hand, when the pressure in the fuel gallery 136 becomes a low pressure, the piston 183 is moved by the urging force of the spring 184 so that the volume of the fuel chamber 182 is decreased. Thus, according to the accumulator 181, fluctuation in the pressure in the fuel gallery 136 can be absorbed.

The fuel injection pump 80 includes delivery valves 190 to 195 (only the delivery valve 190 is illustrated in FIG.2). The delivery valves 190 to 195 are assembled to the second housing 135 so as to be connected to the respective fuel passages 137 to 142. The delivery valves 190 to 195 are connected to the fuel injection valve 50 provided to each of the cylinders of the diesel engine 10.

When fuel having a pressure exceeding a predetermined pressure is supplied from the fuel passages 137 to 142, the delivery valves 190 to 195 supply the fuel to the fuel injection valve 50. When the pressure of the fuel in the fuel passages 137 to 142 is decreased, the delivery valves 190 to 195 maintain the pressure in fuel paths from each of the delivery valves 190 to 195 to the corresponding fuel injection valves 50 at a predetermined pressure. Thus, according to the delivery valves 190 to 195, the pressure of fuel supplied to the fuel injection valves 50 can be maintained at a substantially constant pressure when an injection of fuel is not preformed.

The fuel injection pump 80 also includes an overflow valve 196. The overflow valve 196 is assembled to the cover 95 so that an end of the overflow valve 196 is open to the fuel chamber 96. The overflow valve 196 is connected to the fuel tank not shown in the figures. The overflow valve 196 is provided with a ball valve 197 and a spring 198 therein. The ball valve 197 and the spring 198 together serve as a check valve which opens when a pressure exceeding a predetermined pressure is generated in the fuel chamber 96 so as to release the fuel in the pump chamber 96 to the fuel tank. According to the overflow valve 196, generation of an excessive pressure in the fuel chamber 96 can be prevented.

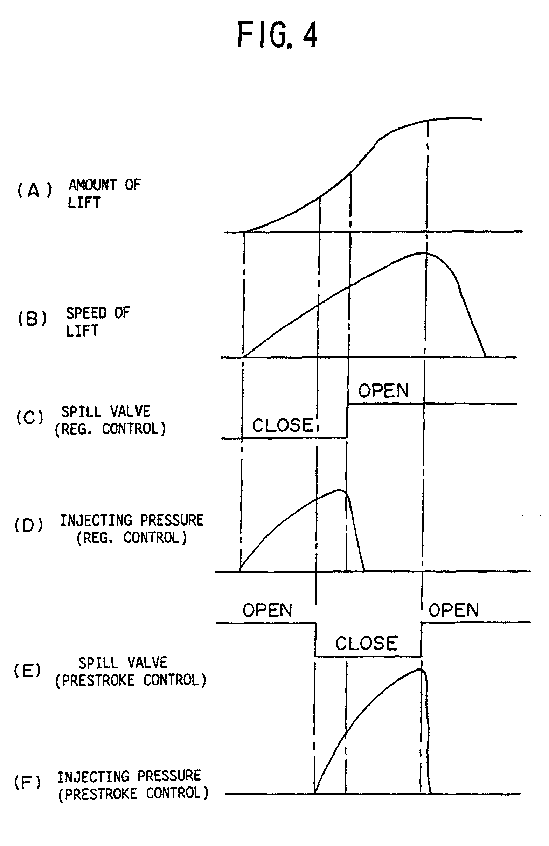

A description will now be given, with reference to FIGS.4 to 6 in addition to FIGS.1 to 3, of an operation of the system according to the present embodiment.

The ECU 12 calculates a quantity Q (hereinafter referred to as fuel injection quantity Q) of fuel to be supplied to the diesel engine 10 based on the intake air temperature THA detected by the intake air temperature sensor 16; the accelerator opening degree θ detected by the accelerator opening degree sensor 30; the intake air pressure PM detected by the intake air pressure sensor 42; the temperature THW of the coolant detected by the water temperature sensor 64; and the engine speed NE calculated based on the signal pulse output from the electromagnetic pick-up sensor 102. Additionally, the ECU 12 controls the spill valve 170 and the TCV 168 so that the fuel injection quantity Q of fuel is injected by each of the fuel injection valves 50 at an appropriate timing.

FIG.4 is a time chart for explaining the operation of the system according to the present embodiment. FIG.4-(A) indicates an amount of lift provided to the plungers 109 to 112; FIG.4-(B) indicates changes in the speed of lift of the plungers 109 to 112; FIG.4-(C) indicates an operational state of the spill valve 170 when a regular control is performed in the present embodiment; FIG.4-(D) indicates changes in the injecting pressure of fuel under the regular control; FIG4-(E) indicates an operational state of the spill valve 170 under a prestroke control performed in the present embodiment; and FIG.4-(F) indicates changes in the injecting pressure of fuel under the prestroke control.

The time chart shown in FIG.4 represents a condition in which the rotor 105 reaches the intake rotational angle. When the rotational angle of the rotor 150 reaches the intake rotational angle, an amount of lift of the plungers 109 to 112 is increased to the maximum amount of lift while the speed of lift of the plungers 109 to 122 is gradually increased as shown in FIG.4-(A) and (B). Thereafter when the amount of lift reaches near the maximum amount of lift, the speed of lift is rapidly decreased.

In the present embodiment, the ECU 12 applies a regular control to the spill valve 170 when a request for acceleration is not made for the diesel engine 10. The regular control is achieved, as shown in FIG.4-(C), by closing the spill valve 170 prior to a start of lift of the plungers 109 to 112 and opening the spill valve 170 when injection of fuel of the desired fuel injection quantity Q is completed.

According to the regular control, the injection of fuel by the fuel injection valve 50 is started at substantially the same time when the lift of the plungers 109 to 122 is started. The ECU 12 reversely calculates the time of completion of the fuel injection based on the fuel injection quantity Q which was calculated based on the outputs of various sensors. When the spill valve 170 is open, the pressure in the pump chamber 107 is rapidly decreased, resulting in completion of the fuel injection by the fuel injection pump 50. According to the above-mentioned process, fuel of the desired fuel injection quantity Q can be supplied to the diesel engine 10 with a high accuracy by controlling the opening time of the spill valve 170.

In the regular control, the fuel injection is performed in a range where the speed of lift of the plungers 109 to 112 is relatively low. The injecting pressure of fuel becomes higher as the speed of lift of the plungers 109 to 112 is increased. Accordingly, when the regular control is applied, the injecting pressure of fuel is controlled to a relatively low value as shown in FIG.4-(D).

In the present embodiment, the ECU 12 applies a prestroke control to the spill valve 170 when a request for acceleration is made for the diesel engine 10. The prestroke control is achieved, as shown in FIG.4-(E), by closing the spill valve 170 after the start of the lift of the plungers 109 to 112, and opening the spill valve 170 when the injection of fuel of a desired fuel injection quantity Q is completed.

According to the prestroke control, the injection of fuel by the fuel injection valve 50 is started by closing the spill valve 170 after the lift of the plungers 109 to 112 is started. Accordingly, when the prestroke control is performed, the start time of the fuel injection is shifted to the delayed angle side as compared to that of the regular control.

It should be noted that, in the system according to the present embodiment, it is possible that the start time is set equal to the start time in the regular control by shifting the start time of fuel injection to the advanced angle side, when the prestroke control is performed, by controlling the TCV 168. However, in the present embodiment, the start time of fuel injection is shifted to the delayed angle side rather than the start time in the regular control in light of a reason described below.

When the prestroke control is performed, the ECU 12 opens the spill valve 170 when the injection of fuel of desired fuel injection quantity Q is completed after the spill valve 170 is closed. When the spill valve 170 is opened, the pressure in the pump chamber 107 is rapidly decreased and the fuel injection is ended. Under the prestroke control, the injection of fuel is performed in a range in which the speed of lift of the plungers 109 to 112 is relatively large. Accordingly, in the prestroke control, the injecting pressure of fuel becomes higher than the injecting pressure in the regular control as shown in FIG.4-(F).

In the system according to the present embodiment, an exhaust gas is introduced into the turbine chamber 70 of the turbocharger 20 via the exhaust pipe 69 when the diesel engine 10 is operated. When the exhaust gas flows into the turbine chamber 70, the turbine of the turbocharger 20 is rotated, and the air in the turbine chamber 22 is supercharged to the diesel engine 10. Since the diesel engine 10 generates a power corresponding to an amount of intake air, the diesel engine 10 can output a large power when air is supercharged as mentioned above.

When the accelerator pedal 28 is depressed in the diesel engine 10, the ECU 12 calculates the fuel injection quantity Q in accordance with the accelerator opening degree θ. At this time, the ECU 12 calculates the fuel injection quantity Q on the assumption that the turbocharger 20 is supercharging an appropriate amount of air.

However, there is a time lag for an increase in the pressure of exhaust gas after the acceleration pedal 28 is depressed. Accordingly, a certain time delay is generated after the accelerator pedal 28 is depressed and until the performance of supercharging by the turbocharger 20 becomes steady.

When such a delay in response of the turbocharger 20 is generated and if the ECU 12 calculates the fuel injection quantity Q without consideration of the delay in response, an excessive fuel may be supplied relative to an amount of intake air immediately after the acceleration pedal 28 is depressed. Under such a condition where an excessive amount of fuel is supplied to the diesel engine 10, a premature ignition of fuel tends to occur, and thus a so-called diesel knocking noise tends to be generated.

If a correction for reducing the fuel injection quantity Q is performed, or if the start time of fuel injection is delayed, generation of the diesel knocking noise can be suppressed. However, if the former method is performed, there is a problem in that the output torque of the diesel engine 10 is decreased and the acceleration performance is deteriorated. On the other hand, if the later method is performed, there is a problem in that an amount of unburned components included in the exhaust gas is increased, and exhaust emission is deteriorated.

The system according to the present embodiment suppresses the diesel knocking noise without decreasing an output torque and without deteriorating exhaust emission by the above-mentioned prestroke control when a request for acceleration is made for the diesel engine 10.

That is, in the present embodiment, the ECU 12 performs the prestroke control without correction for reducing the fuel injection quantity Q when the request for acceleration is made for the diesel engine 10. Thus, the start time of fuel injection is shifted to the delayed angle side which results in that a possibility of premature ignition of fuel is reduced. Accordingly, if a delay in response of the turbocharger 20 occurs when a request for acceleration is made, generation of the diesel knocking noise is suppressed.

Additionally, when the prestroke control for the spill valve 170 is performed, the injecting pressure of fuel becomes higher than the injecting pressure when the regular control is performed. If the injecting pressure of fuel becomes high, a time necessary for injecting fuel of the desired fuel injection quantity Q is shortened. When fuel of the fuel injection quantity Q is injected in a short period of time, the end time of fuel injection is not largely shifted to the delayed angle side even if the start time of fuel injection is shifted to the delayed angle side. Additionally, if the end time of fuel injection is not largely shifted to the delayed angle side, an increase in the amount of unburned components included in the exhaust gas can be prevented.

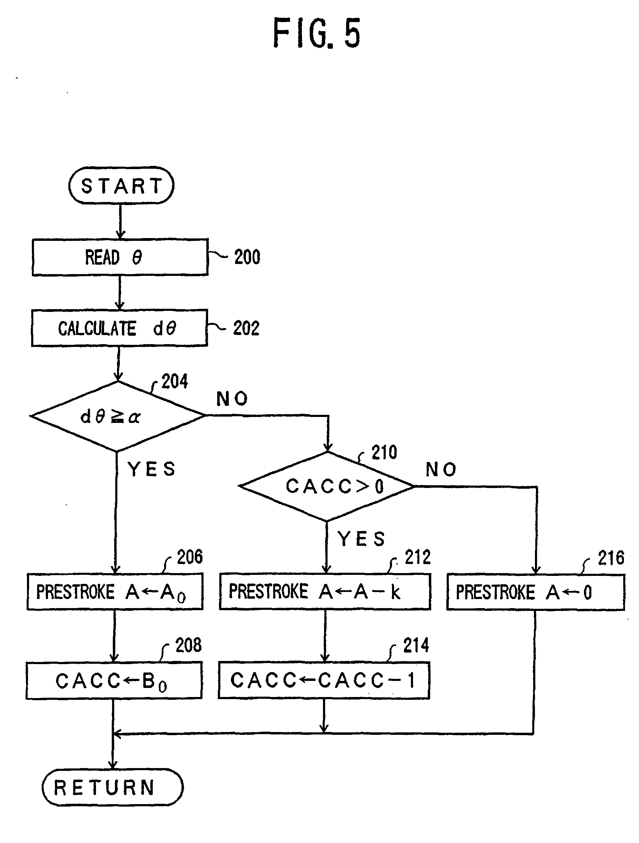

As mentioned above, according to the present embodiment, the diesel knocking noise can be suppressed while a good acceleration performance and a good exhaust characteristic are maintained when the request for acceleration is made for the diesel engine 10. A description will now be given, with reference to FIG.5, of a process performed by the ECU 12 to achieve the above-mentioned function.

FIG.5 is a flowchart of a control routine performed by the ECU 12 to achieve the above-mentioned function. The routine shown in FIG.5 is a periodical interruption routine which is started, for example, every 8 milliseconds. When the routine is started, the process of step 200 is executed first.

In step 200, the accelerator opening degree θ is read. After the process of step 200 is ended, the process of step 202 is executed.

In step 202, an amount of change dθ in the accelerator opening degree θ is calculated, the change being generated during a predetermined time period. In the present embodiment, dθ is calculated as a difference between θ detected in the current process and θ detected in the process executed 0.2 milliseconds before the current process, that is, θ detected in the process preceding 25 processes to the current process. After the process of step 202 is completed, the process of step 204 is executed.

In step 204, it is determined whether or not the amount of change dθ is equal to or greater than a predetermined value α. The predetermined value α is a threshold value which is referred to for determining whether or not a request for acceleration is being made for the diesel engine 10. In the present embodiment, the predetermined value α is set to 50%. If it is determined, as a result of the above-mentioned determination, that dθ≥α is established, it is determined that an acceleration has been started. In this case, the process of step 206 is executed.

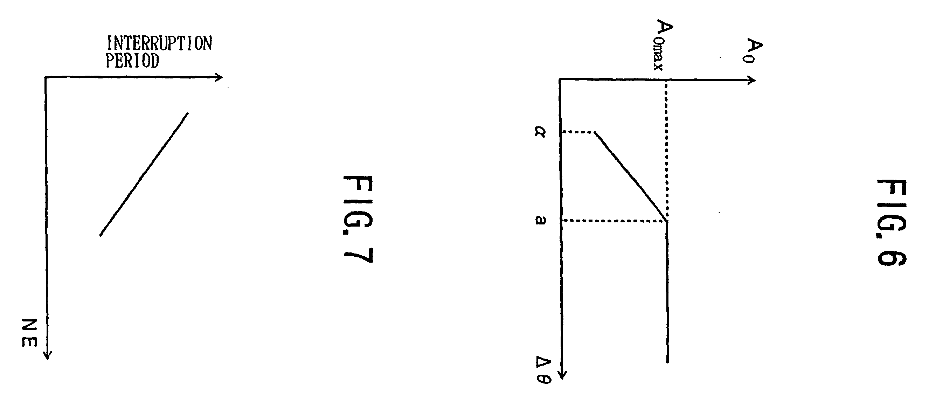

In step 206, an initial value A₀ is substituted for a prestroke value A. In the present embodiment, the initial value A₀ is set based on the amount of change dθ by referring to a map representing a graph shown in FIG.6. As shown in FIG.6, the initial value A₀ is set to a value proportional to dθ in the range where α≤dθ≤a is established. The initial value A₀ is set to a maximum value A₀ₘₐₓ in the range where a<dθ is established. In the present embodiment, the maximum value A₀ₘₐₓ is set to 4 degrees.

After the process of step 206 is executed, the closing time of the spill valve 170 is set to the time when the crank angle is changed by A degrees after a lift of the plungers 109 to 112 occurs. According to the above-mentioned process of step 206, a larger value can be set to the prestroke value A as the accelerator pedal 28 is depressed more powerfully, that is, as a possibility of generation of the delay in the response of the turbocharger 20 is increased. After the process of the above-mentioned step 206 is ended, the process of step 208 is executed.

In step 208, an initial value B₀ is substituted for a counter CACC. The counter CACC is provided for counting the remaining time period to perform the prestroke control. The counter CACC is decremented by 1 each time the present routine is started after the present step 208 is executed. In the present embodiment, the initial value B₀ is set to a value corresponding to 400 milliseconds, that is, a value "50". After the process of step 208 is completed, the present routine is ended.

If it is determined, in step 204, that dθ≥α is not established, is can be determined that an acceleration of the diesel engine 10 is not performed at the present time. In this case, the process of step 210 is executed.

In step 210, it is determined whether or not the counter CACC is still set at a value other than "0". If it is determined that CACC>0 is established, the process of step 212 is executed.

In step 212, the prestroke value A is updated. In step 212, a value obtained by subtracting a predetermined value k from the prestroke value A set in the previous process is set to the updated prestroke value A. After the process of step 212 is completed, the process of step 214 is executed. In the above-mentioned process, the prestroke value A can be decreased in synchronization with elimination of the delay in response of the turbocharger 20 after an acceleration of the diesel engine 20 is started.

In step 214, the counter CACC is decremented by 1. After the process of step 214 is completed, the present routine is ended.

If it is determined, in step 210, that CACC>0 is not established, that is, if it is determined that the counter CACC has been decremented down to "0", it can be determined that there is no need to perform the prestroke control any more. In this case, the process of step 216 is executed.

In step 216, "0" is substituted for the prestroke value A. After the process of step 216 is executed, a regular control is applied to the spill valve 170 so that the spill valve 170 is closed before a lift is generated in the plungers 109 to 112. After the process of step 216 is completed, the present routine is ended.

In the above-mentioned embodiment, although the initial value A₀ of the prestroke value A is varied in response to the amount of change dθ, the present invention is not limited to this method, and the initial value A₀ may be set to a constant value. Additionally, in the above-mentioned embodiment, although the initial value B₀ of the counter CACC is set to a constant value, the present invention is not limited to this method, and the initial value B₀ may be varied in response to the amount of change dθ.

Further, in the above-mentioned embodiment, although the routine shown in FIG.5 is a periodical interruption routine, the present invention is not limited to such a routine and the routine shown in FIG.5 may be an NE interruption routine which is started each time the crank shaft of the diesel engine 10 rotates a predetermined angle.

FIG.7 is a graph representing a relationship between the engine speed NE and a interruption period when the routine shown in FIG.5 is set as an NE interruption routine. As shown in FIG.7, the NE interruption routine is more frequently started as the engine speed NE is increased.

In step 202 of the routine shown in FIG.5, the difference between the accelerator opening degree θ detected in the present process and the accelerator opening degree θ detected in the process preceding 25 processes is set as dθ. If the speed of depression of the accelerator pedal 28 is the same, the value of dθ is increased as the interruption period of the present routine is increased, that is, as the engine speed NE is decreased. Accordingly, when the routine shown in FIG.5 is the NE interruption routine, the condition of step 204 is difficult to be established as the engine speed NE is decreased.

Additionally, in the routine shown in FIG.5, the prestroke control is ended when the counter CACC is counted down for the predetermined times B₀. Accordingly, the prestroke control is continued for a longer time as the interruption period of the present routine is longer, that is, as the engine speed NE is decreased.

The possibility of generation of the delay in response of the turbocharger 20 is increased as the engine speed NE is decreased. In other words, the possibility of generation of the delay in response of the turbocharger 20 is decreased as the engine speed NE is increased. Accordingly, it is preferred to continue the prestroke control for a longer period and more frequently as the engine speed NE is deceased. When the routine shown in FIG.5 is set as the NE interruption routine, the condition of step 204 is difficult to be established, and the counting of the counter CACC takes a longer time. Thus, if the routine shown in FIG.5 is set as the NE interruption routine, the above-mentioned requirements are satisfied.

It should be noted that, in the above-mentioned embodiment, the turbocharger 20 corresponds to the supercharger. The fuel injection quantity calculating means is achieved by the ECU 12 calculating the fuel injection quantity Q based on NE and θ. The acceleration start detecting means is achieved by the ECU 12 performing the process of steps 200 to 204. The acceleration injection control means is achieved by the ECU 12 performing the process of step 206.

Additionally, in the above-mentioned embodiment, the roller shoes 145 to 148, the rollers 149 to 152 and the roller ring 153 correspond to the cam mechanism. The fuel chamber 96 corresponds to the low pressure source. The spill valve closing means is achieved by the ECU 12 sending a valve close instruction to the spill valve 170. The prestroke value setting means is achieved by the ECU 12 performing the process of step 206. The prestroke value decreasing means is achieved by the ECU 12 performing the process of step 211.

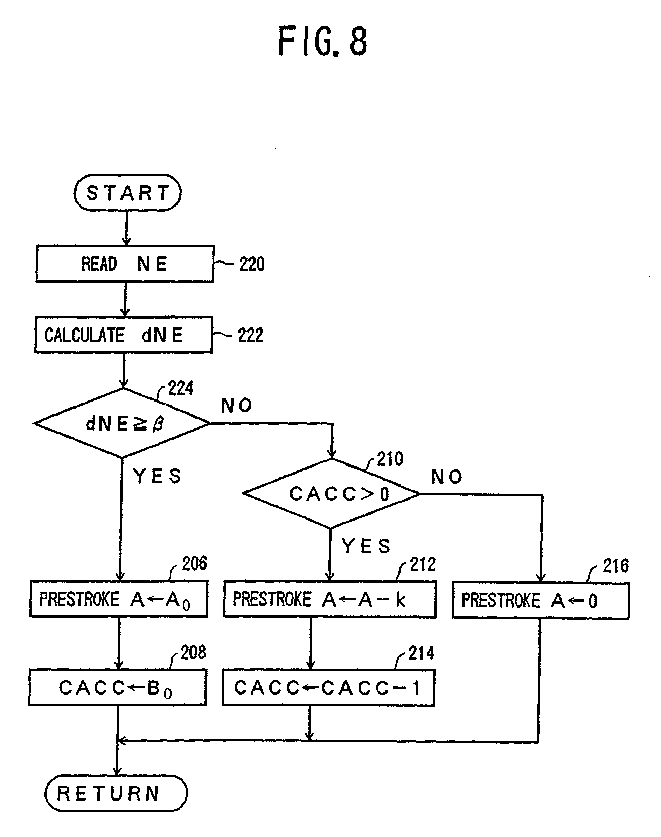

A description will now be given, with reference to FIG.8, of a second embodiment according to the present invention. A system according to the second embodiment is achieved by setting the ECU 12 to perform a routine shown in FIG.8 instead of the routine shown in FIG.5 in the system structure shown in FIGS.1 to 3.

In the above-mentioned first embodiment, the determination is made as to whether or not a request of acceleration is being made for the diesel engine 10 based on the amount of change dθ of the accelerator opening degree. On the other hand, in the present embodiment, the determination is made as to whether or not the request for acceleration is being made based on an amount of change dNE in the engine speed NE.

FIG.8 is a flowchart of a control routine performed by the ECU 12 in the present embodiment. The routine shown in FIG.8 is a periodical interruption routine which is started, for example, every 8 milliseconds. It should be noted that, in FIG.8, steps that are the same as the steps shown in FIG.5 are given the same step numbers, and descriptions thereof will be omitted.

When the routine shown in FIG.8 is started, the process of step 220 is executed first. In step 220, the engine speed NE is read. After the process of step 220 is ended, the process of step 222 is performed.

In step 222, the amount of change dNE of the engine speed generated during a predetermined time period is calculated. In the present embodiment, dNE is calculated as a difference between NE detected in the current process and NE detected in the process executed 0.2 milliseconds before the current process, that is, NE detected in the process preceding 25 processes to the current process. After the process of step 222 is completed, the process of step 224 is executed.

In step 224, it is determined whether or not the amount of change dNE is equal to or greater than a predetermined value β. The predetermined value β is a threshold value which is referred to for determining whether or not a request for acceleration is being made for the diesel engine 10. If it is determined, as a result of the above-mentioned determination, that dNE≥β is established, it is determined that an acceleration has been started. In this case, an initial value A₀ is substituted, in step 206, for the prestroke value A. Then, an initial value B₀ is substituted, in step 208, for the counter CACC, and the routine is ended.

If it is determined, in step 224, that dNE≥β is not established, it can be determined that an acceleration of the diesel engine 10 is not started when the present process is performed. In this case, it is then determined, in step 210, whether or not CACC>0 is established. If it is determined that CACC>0 is established, the prestroke value A is updated, in step 212, to the decrease side, and the counter CACC is decremented in step 214, and then the routine is ended. On the other hand, if it is determined that CACC>0 is not established, "0" is substituted for the prestroke value A in step 216, and the routine is ended.

According to the above-mentioned process, similar to the first embodiment, the prestroke control is started at the same time when a request for acceleration is made for the diesel engine 10, and the prestroke value A can be decreased in synchronization with elimination of the delay in response of the turbocharger 20. Thus, according to the system of the present embodiment, the diesel knocking noise can be effectively suppressed while maintaining a good acceleration performance and a good exhaust emission when a request of acceleration is made for the diesel engine 10.

In the present embodiment, the initial value A₀ of the prestroke value A and the initial value B₀ of the counter CACC may be constant values or functions of dNE. Additionally, in the present embodiment, the routine shown in FIG.8 is not limited to the periodical interruption routine, and the routine may be an NE interruption routine.

It should be noted that in the above-mentioned embodiment, the acceleration start detecting means is achieved by the ECU 12 performing the process of ECU 12.

The present invention is not limited to the specifically disclosed embodiments.

An acceleration control apparatus of a diesel engine (10) provided with a supercharger which suppresses generation of a diesel knocking noise while maintaining a good acceleration characteristic and a good emission characteristic. A quantity of fuel to be injected is calculated based on operational condition information including an engine speed (NE) and a degree (θ) of opening of an accelerator. A start of acceleration of the diesel engine (10) is detected. When the acceleration of the diesel engine (10) is started, a start time of injection of fuel is delayed from a start time of injection of fuel under a normal condition and a pressure of the fuel for injection is increased.

## Claims

1. An acceleration control apparatus performing a fuel injection control during acceleration of a diesel engine (10) provided with a supercharger (20),
**characterized in that**:
fuel injection quantity calculating means calculates a quantity of fuel to be injected based on operational condition information;
acceleration start detecting means detects a start of acceleration of said diesel engine (10); and
acceleration injection control means delays, when the acceleration of said diesel engine (10) is started, a start time of injection of fuel from a start time of injection of fuel under a normal condition and increases a pressure of the fuel for injection.

2. The acceleration control apparatus as claimed in claim 1, **characterized in that** said operational condition information includes an engine speed (NE) and a degree (θ) of opening of an accelerator.

3. The acceleration control apparatus as claimed in claim 2, **characterized in that** said acceleration start detecting means detects the start of acceleration when a difference (dθ) between a degree (θ) of opening of said diesel engine (10) at the present time and a degree (θ) of opening of said diesel engine (10) at a time a first predetermined period before the present time exceeds a predetermined value (α).

4. The acceleration control apparatus as claimed in claim 3, **characterized in that** a detecting operation of said acceleration start detecting means is performed every predetermined period, and said difference (dθ) is obtained based on the degree of opening (θ) detected in the detecting operation performed at the present time and the degree of opening (θ) detected in the detecting operation performed a predetermined number of detecting operations preceding the present detecting operation.

5. The acceleration control apparatus as claimed in claim 3 or 4, **characterized in that**:
said acceleration injection control means includes:
prestroke value setting means for setting a predetermined delay time provided for the start time of injection of fuel; and
prestroke value decreasing means for continuously decreasing said predetermined delay time during a second predetermined period.

6. The acceleration control apparatus as claimed in claim 5, **characterized in that** said predetermined delay time is increased until said difference (dθ) reaches a predetermine maximum value, and is maintained at said predetermined maximum value after said difference reaches said predetermined maximum value.

7. The acceleration control apparatus as claimed in claim 1, **characterized in that** said acceleration start detecting means detects the start of acceleration when a difference (dNE) between an engine speed (NE) of said diesel engine (10) at the present time and an engine speed (NE) of said diesel engine (10) at a time a first predetermined period before the present time exceeds a predetermined value (β).

8. The acceleration control apparatus as claimed in claim 7, **characterized in that** a detecting operation of said acceleration start detecting means is performed every predetermined period, and said difference (dNE) is obtained based on the engine speed (NE) detected in the detecting operation performed at the present time and the engine speed (NE) detected in the detecting operation performed a predetermined number of detecting operations preceding the present detecting operation.

9. The acceleration control apparatus as claimed in claim 7 or 8, **characterized in that**:
said acceleration injection control means includes:
initial value setting means for setting a predetermined delay time provided for the start time of injection of fuel; and
initial value decreasing means for continuously decreasing said predetermined delay time during a second predetermined period.

10. The acceleration control apparatus as claimed in one of claims 1 to 4, 7 and 8, **characterized in that**:
a fuel injection valve (50) injects fuel to said diesel engine (10) in synchronization with a change in a crank angle of said diesel engine (10);
spill valve opening means opens a spill valve (170) when a crank angle of said diesel engine (10) reaches a predetermined valve closing angle, said spill valve (170) being closed for supplying fuel to said fuel injection valve (50);
prestroke value setting means sets a predetermined prestroke value to said predetermined valve closing angle when the acceleration of said diesel engine (10) is started; and
prestroke value decreasing means decreases said predetermined prestroke value at a predetermined rate after said predetermined prestroke value is set to said predetermined valve closing angle.

## Patentansprüche

1. Beschleunigungssteuergerät, das eine Kraftstoffeinspritzsteuerung durchführt während einer Beschleunigung eines Dieselmotors (10), der mit einer Aufladeeinrichtung (20) versehen ist,
**dadurch gekennzeichnet, dass**
eine Kraftstoffeinspritzmengenberechnungseinrichtung eine einzuspritzende Kraftstoffmenge berechnet auf der Grundlage einer Betriebszustandsinformation;
eine Beschleunigungsstarterfassungseinrichtung einen Beschleunigungsstart des Dieselmotors (10) erfasst; und
eine Beschleunigungseinspritzsteuereinrichtung bei dem Start der Beschleunigung des Dieselmotors (10) eine Startzeit der Kraftstoffeinspritzung gegenüber einer Startzeit der Kraftstoffeinspritzung bei einem normalen Zustand verzögert und einen Druck der Kraftstoffeinspritzung erhöht.

2. Beschleunigungssteuergerät nach Anspruch 1, **dadurch gekennzeichnet, dass** die Betriebszustandsinformation eine Motordrehzahl (NE) und einen Öffnungsgrad (θ) des Gaspedals umfasst.

3. Beschleunigungssteuergerät nach Anspruch 2, **dadurch gekennzeichnet, dass** die Beschleunigungsstarterfassungseinrichtung den Start der Beschleunigung erfasst, wenn eine Differenz (dθ) zwischen einem Öffnungsgrad (θ) des Dieselmotors (10) bei der vorliegenden Zeit und einem Öffnungsgrad (θ) des Dieselmotors (10) bei einer Zeit einer ersten vorgegebenen Periode vor der vorliegenden Zeit einen vorgegebenen Wert (α) überschreitet.

4. Beschleunigungssteuergerät nach Anspruch 3, **dadurch gekennzeichnet, dass** ein Erfassungsvorgang der Beschleunigungsstarterfassungseinrichtung bei jeder vorgegebenen Periode durchgeführt wird und die Differenz (dθ) erhalten wird auf der Grundlage des Öffnungsgrads (θ), der erfasst wird bei dem Erfassungsvorgang, der bei der vorliegenden Zeit durchgeführt wird, und des Öffnungsgrads (θ), der erfasst wird bei dem Erfassungsvorgang, der eine vorgegebene Anzahl Erfassungsvorgänge vor dem vorliegenden Erfassungsvorgang durchgeführt wird.

5. Beschleunigungssteuergerät nach Anspruch 3 oder 4, **dadurch gekennzeichnet, dass** die Beschleunigungseinspritzsteuereinrichtung Folgendes umfasst:
eine Vorhubwerteinrichteeinrichtung zum Einrichten einer vorgegebenen Verzögerungszeit, die vorgesehen ist für die Startzeit der Kraftstoffeinspritzung; und
eine Vorhubwertverminderungseinrichtung zum kontinuierlichen Vermindern der vorgegebenen Verzögerungszeit während einer zweiten vorgegebenen Periode.

6. Beschleunigungssteuergerät nach Anspruch 5, **dadurch gekennzeichnet, dass** die vorgegebene Verzögerungszeit erhöht wird bis die Differenz (dθ) einen vorgegebenen Maximalwert erreicht und bei dem vorgegebenen Maximalwert gehalten wird nachdem die Differenz den vorgegebenen Maximalwert erreicht.

7. Beschleunigungssteuergerät nach Anspruch 1, **dadurch gekennzeichnet, dass** die Beschleunigungsstarterfassungseinrichtung den Start der Beschleunigung erfasst, wenn eine Differenz (dNE) zwischen einer Motordrehzahl (NE) des Dieselmotors (10) bei der vorliegenden Zeit und einer Motordrehzahl (NE) des Dieselmotors (10) bei einer Zeit einer ersten vorgegebenen Periode vor der vorliegenden Zeit einen vorgegebenen Wert (β) überschreitet.

8. Beschleunigungssteuergerät nach Anspruch 7, **dadurch gekennzeichnet, dass** ein Erfassungsvorgang der Beschleunigungsstarterfassungseinrichtung bei jeder vorgegebenen Periode durchgeführt wird und die Differenz (dNE) erhalten wird auf der Grundlage der Motordrehzahl (NE), die erfasst wird bei dem Erfassungsvorgang, der durchgeführt wird bei der vorliegenden Zeit, und der Motordrehzahl (NE), die erfasst wird bei dem Erfassungsvorgang, der durchgeführt wird, eine vorgegebene Anzahl an Erfassungsvorgängen vor dem vorliegenden Erfassungsvorgang.

9. Beschleunigungssteuergerät nach Anspruch 7 oder 8, **dadurch gekennzeichnet, dass** die Beschleunigungseinspritzsteuereinrichtung Folgendes umfasst:
eine Anfangswerteinrichteeinrichtung zum Einrichten einer vorgegebenen Verzögerungszeit, die für die Startzeit der Kraftstoffeinspritzung vorgesehen ist; und
eine Anfangswertverminderungseinrichtung zum kontinuierlichen Vermindern der vorgegebenen Verzögerungszeit während einer zweiten vorgegebenen Periode.

10. Beschleunigungssteuergerät nach einem der Ansprüche 1 bis 4, 7 und 8, **dadurch gekennzeichnet, dass**:
ein Kraftstoffeinspritzventil (50) Kraftstoff in den Dieselmotor (10) einspritzt synchron mit einer Änderung eines Kurbelwinkels des Dieselmotors (10);
eine Überlaufventilöffnungseinrichtung ein Überlaufventil (170) öffnet, wenn ein Kurbelwinkel des Dieselmotors (10) einen vorgegebenen Ventilschließwinkel erreicht, wobei das Überlaufventil (170) geschlossen wird für die Zufuhr von Kraftstoff zu dem Kraftstoffeinspritzventil (50);
eine Vorhubwerteinrichteeinrichtung einen vorgegebenen Vorhubwert einrichtet auf den vorgegebenen Ventilschließwinkel, wenn die Beschleunigung des Dieselmotors (10) gestartet wird; und
eine Vorhubwertverminderungseinrichtung den vorgegebenen Vorhubwert mit einer vorgegebenen Rate vermindert nachdem der vorgegebene Vorhubwert eingerichtet ist auf den vorgegebenen Ventilschließwinkel.

## Revendications

1. Un dispositif de commande d'accélération effectuant une commande d'injection de carburant pendant une accélération d'un moteur diesel (10) pourvu d'un compresseur volumétrique (20),
**caractérisé en ce que**:
des moyens de calcul de quantité d'injection de carburant calculent une quantité de carburant à injecter sur la base d'informations de condition de fonctionnement;
des moyens de détection de début d'accélération détectent un début d'accélération dudit moteur diesel (10); et
des moyens de commande d'injection d'accélération retardent, lorsque l'accélération dudit moteur diesel (10) est débutée, un moment de début d'injection de carburant par rapport à un moment de début d'injection de carburant dans une condition normale et augmentent une pression du carburant pour injection.

2. Le dispositif de commande d'accélération selon la revendication 1, **caractérisé en ce que** lesdites informations de condition de fonctionnement comprennent une vitesse de moteur (NE) et un degré (θ) d'ouverture d'un accélérateur.

3. Le dispositif de commande d'accélération selon la revendication 2, **caractérisé en ce que** lesdits moyens de détection de début d'accélération détectent le début d'accélération lorsqu'une différence (dθ), entre un degré (θ) d'ouverture dudit moteur diesel (10) au moment présent et un degré (θ) d'ouverture dudit moteur diesel (10) à un moment une première période prédéterminée avant le moment présent, dépasse une valeur prédéterminée (α).

4. Le dispositif de commande d'accélération selon la revendication 3, **caractérisé en ce qu'**une opération de détection par lesdits moyens de détection de début d'accélération est effectuée à chaque période prédéterminée, et ladite différence (dθ) est obtenue à partir du degré d'ouverture (θ) détecté lors de l'opération de détection effectuée au moment présent et du degré d'ouverture (θ) détecté lors de l'opération de détection effectuée un nombre de fois prédéterminé d'opérations de détection avant l'opération de détection actuelle.

5. Le dispositif de commande d'accélération selon la revendication 3 ou 4, **caractérisé en ce que**:
lesdits moyens de commande d'injection d'accélération comprennent:
des moyens de détermination de valeur de pré-course pour déterminer un temps de retard prédéterminé associé au moment de début d'injection de carburant; et
des moyens de diminution de valeur de pré-course pour diminuer de manière continue ledit temps de retard prédéterminé pendant une deuxième période prédéterminée.

6. Le dispositif de commande d'accélération selon la revendication 5, **caractérisé en ce que** ledit temps de retard prédéterminé est augmenté jusqu'à ce que ladite différence (dθ) atteigne une valeur maximum prédéterminée, et est maintenu à ladite valeur maximum prédéterminée après que ladite différence ait atteint ladite valeur maximum prédéterminée.

7. Le dispositif de commande d'accélération selon la revendication 1, **caractérisé en ce que** lesdits moyens de détection de début d'accélération détectent le début d'accélération lorsqu'une différence (dNE), entre une vitesse de moteur (NE) dudit moteur diesel (10) au moment présent et une vitesse de moteur (NE) dudit moteur diesel (10) à un moment une première période prédéterminée avant le moment présent, dépasse une valeur prédéterminée (β).

8. Le dispositif de commande d'accélération selon la revendication 7, **caractérisé en ce qu'**une opération de détection desdits moyens de détection de début d'accélération est effectuée à chaque période prédéterminée, et ladite différence (dNE) est obtenue à partir de la vitesse de moteur (NE) détectée lors de l'opération de détection effectuée au moment présent et de la vitesse de moteur (NE) détectée lors de l'opération de détection effectuée un nombre de fois prédéterminé d'opérations de détection avant l'opération de détection actuelle.

9. Le dispositif de commande d'accélération selon la revendication 7 ou 8, **caractérisé en ce que**:
lesdits moyens de commande d'injection d'accélération comprennent:
des moyens de détermination de valeur initiale pour déterminer un temps de retard prédéterminé associé au moment de début d'injection de carburant; et
des moyens de diminution de valeur initiale pour diminuer de manière continue ledit temps de retard prédéterminé pendant une deuxième période prédéterminée.

10. Le dispositif de commande d'accélération selon l'une des revendications 1 à 4, 7 et 8, **caractérisé en ce que**:
une soupape d'injection de carburant (50) injecte du carburant dans ledit moteur diesel (10) en synchronisation avec une modification d'un angle de vilebrequin dudit moteur diesel (10);
des moyens d'ouverture de soupape de décharge ouvrent une soupape de décharge (170) lorsqu'un angle de vilebrequin dudit moteur diesel (10) atteint un angle de fermeture de soupape prédéterminé, ladite soupape de décharge (170) étant fermée pour délivrer du carburant vers ladite soupape d'injection de carburant (50);
des moyens de détermination de valeur de pré-course déterminent une valeur de pré-course prédéterminée par rapport audit angle de fermeture de soupape prédéterminé lorsque l'accélération dudit moteur diesel (10) est débutée; et
des moyens de diminution de valeur de pré-course diminuent ladite valeur de pré-course prédéterminée à une vitesse prédéterminée après que ladite valeur de pré-course prédéterminé a été fixée par rapport audit angle de fermeture de soupape prédéterminé.
